(19) Europäisches Patentamt / European Patent Office / Office européen des brevets

(11) **EP 3 475 378 B1**

(12) **EUROPEAN PATENT SPECIFICATION**

(45) Date of publication and mention of the grant of the patent:
**02.09.2020 Bulletin 2020/36**

(51) Int Cl.:
***C09K 3/14*** *(2006.01)*     ***C04B 35/107*** *(2006.01)*

(86) International application number:
**PCT/JP2017/023039**

(21) Application number: **17739706.4**

(22) Date of filing: **22.06.2017**

(87) International publication number:
**WO 2018/003655 (04.01.2018 Gazette 2018/01)**

(54) **ELECTROFUSED ALUMINA GRAINS, PRODUCTION METHOD FOR ELECTROFUSED ALUMINA GRAINS, GRINDING STONE, AND COATED ABRASIVE**

ELEKTROGESCHMOLZENEM ALUMINIUMOXIDKÖRNER, HERSTELLUNGSVERFAHREN FÜR ELEKTROGESCHMOLZENE ALUMINIUMOXIDKÖRNER, SCHLEIFSTEIN UND BESCHICHTETES SCHLEIFMITTEL

GRAINS D'ALUMINE ÉLECTROFUSIONNÉS, PROCÉDÉ DE PRODUCTION DE GRAINS D'ALUMINE ÉLECTROFUSIONNÉS, MEULE, ET ABRASIF REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2016 JP 2016127819**

(43) Date of publication of application:
**01.05.2019 Bulletin 2019/18**

(73) Proprietor: **Showa Denko K.K.**
**Tokyo 105-8518 (JP)**

(72) Inventors:
• **YAMAOKA, Satoshi**
  **Shiojiri-shi**
  **Nagano 399-6461 (JP)**
• **MIYAISHI, So**
  **Shiojiri-shi**
  **Nagano 399-6461 (JP)**
• **TOMIKAWA, Shinichiro**
  **Shiojiri-shi**
  **Nagano 399-6461 (JP)**

(74) Representative: **Strehl Schübel-Hopf & Partner**
**Maximilianstrasse 54**
**80538 München (DE)**

(56) References cited:
**US-A- 4 252 544**     **US-A1- 2007 277 444**
**US-A1- 2015 175 769**

## Description

## Technical Field

The present invention relates to electrofused alumina grains and a production method for electrofused alumina grains, and to a grinding stone and a coated abrasive using electrofused alumina grains.

## Background Art

Alumina abrasives specified in JIS R 6111-2005 are called artificial abrasives and are used as a constituent element for abrasive grinding stones, a coated abrasive, etc. As specified in JIS R 6111-2005, alumina abrasives include white alumina abrasives (WA), rose-pink alumina abrasives (PA) and monocrystalline fused alumina abrasives (HA), etc. These are produced by fusing an alumina material of alumina purified according to a Bayer process, in an electric furnace, then solidifying it, and grinding and size-regulating the resultant mass or crushing and size-regulating the mass. The toughness of these alumina abrasives is in a relation of HA > PA > WA. However, for cutting and machining such hardly-machinable work materials used for tool steel and the like widely popularized at present, these alumina abrasives could not realize sufficiently satisfactory cutting performance. Consequently, improving cutting performance of alumina abrasives is tried. For example, PTLs 1 to 5 describe methods for improving cutting performance of alumina abrasives, as mentioned below.

PTL 1 describes heat treatment of white electrofused alumina abrasive (WA) having an alumina content of 99.0% or more at 1,600 to 1,850°C for 30 minutes to 2 hours. By the heat treatment, defects, fine flaws, cracks and other formed in grinding electrofused alumina ingots can be repaired by atomic diffusion and rearrangement at high temperatures, or flaws formed in grinding are shallowed, or $Na_2O$ contained in alumina abrasives evaporate to enhance the strength of alumina abrasives. As a result, the cutting performance of alumina abrasives can be improved.

PTL 2 describes a method of heat treatment of $TiO_2$-containing electrofused alumina grains to coat the surfaces of electrofused alumina grains with the formed aluminum titanate, thereby enhancing the strength and the toughness of the alumina grains. Using the alumina grains produced according to the method as grinding stones has realized more excellent cutting performance than that of conventional electrofused alumina abrasives of white electrofused alumina or the like. From this, it is known that increasing the toughness of alumina grains is effective for improving cutting performance.

PTL 3 describes a method of enhancing hardness by externally adding $TiO_2$ into alumina materials to dissolve $TiO_2$ as solid therein. According to this method, $TiO_2$ is buried in a high-purity alumina material and through heat treatment, a part of the buried $TiO_2$ is dissolved as solid on the alumina surface so that the hardness of the alumina material is thereby enhanced. However, PTL 3 describes nothing as to whether or not any impurity is previously contained in the alumina itself to be used.

PTL 4 describes fused grains containing aluminum, titanium and magnesium. The main ingredients of the fused grains is $Al_2TiO_5$ having a crystal structure of a pseudo-Brookite structure. PTL 4 describes use of the fused grains as a fireproof material, a filter, etc. However, the fused grains do not have a corundum structure containing alumina as the main ingredient and having a high hardness, and therefore, it is difficult to use these fused grains as a grinding material such as abrasive grains.

PTL 5 describes abrasive grains of an alumina polycrystalline material using a sol-gel method or the like. In addition, PTL 5 says that the abrasive grains formed of such fine alumina crystals exhibit higher cutting performance than electrofused alumina grains.

PTL 6 describes electrofused titanium-oxide containing aluminium oxide particles based on corundum .

## Citation List

## Patent Literature

PTL 1: JP-A 50-80305
PTL 2: JP-A 7-215717
PTL 3: JP-A 8-133824
PTL 4: JP-T 2011-526574
PTL 5: JP-A 3-68678
PTL 6: US 2015/175769

## Summary of Invention

### Technical Problem

PTLs 1 to 4 describes various techniques of improving cutting performance of alumina abrasives, which, however, could not attain sufficient abrasive performance. Grinding stones using abrasive grains of an alumina polycrystalline material such as sintered alumina abrasive grains described in PTL 5 are excellent in abrasive performance as compared with grinding stones using fused alumina abrasive grains. However, the production method for the sintered alumina abrasive grains is complicated, and therefore the production cost of sintered alumina abrasive grains is high. For the reasons as above, it is desired to obtain alumina grains having high cutting performance and capable of being produced according to an inexpensive process such as a fusing process.

Given the situation, an object of the present invention is to provide electrofused alumina grains excellent in grinding performance and a production method of such electrofused alumina grains, and to provide a grinding stone and a coated abrasive using the electrofused alumina grains.

### Solution to Problem

As a result of assiduous studies, the present inventors have found that, when electrofused alumina grains are made to contain titanium and magnesium, the strength and the toughness of the resultant electrofused alumina grains can be improved and consequently the grinding performance of the electrofused alumina grains can be improved, and have completed the present invention. Specifically, the present invention is as defined by the claims.

In a first aspect, the present invention relates to alumina grains containing titanium and magnesium, wherein the titanium content in terms of $TiO_2$ in the electrofused alumina grains is from 0.7 to 1.2% by mass, and the magnesium content in terms of MgO in the electrofused alumina grains is from 3.0 to 20 mol relative to 100 mol of the titanium content in terms of $TiO_2$ in the electrofused alumina grains.

Preferably, the electrofused alumina grains satisfy the following expression (1):

$$y < -1.506x + 3.525 \ (1)$$

wherein x indicates the C-stage bulk specific gravity of the electrofused alumina grains and y indicates the C coefficient of the electrofused alumina grains.

In a second aspect, the invention relates to a method for producing electrofused alumina grains according to the first aspect, including the steps of:

preparing a mixture material by mixing an alumina material, a titanium compound and a magnesium compound, forming an ingot from the mixture material according to an electrofusing process, grinding the ingot to prepare a ground powder,

size-regulating the ground powder to have a predetermined grain size to prepare size-regulated grains, and

heating the size-regulated grains at a heating temperature of 1,000°C or higher to give electrofused alumina grains.

According to the method, the blending amount of the titanium compound in the step of preparing the mixture material is such an amount that the titanium content in terms of $TiO_2$ in the ingot is from 0.7 to 1.2% by mass.

The blending amount of the magnesium compound in the step of preparing the mixture material is such an amount that the magnesium content in terms of MgO in the ingot is from 3.0 to 20 mol relative to 100 mol of the titanium content in terms of $TiO_2$ in the ingot.

Preferably, the heating temperature in the step of producing the electrofused alumina grains is from 1,000°C to 1,800°C.

In third- and fourth- aspects, the invention relates to a grinding stone and a coated abrasive containing the electrofused alumina grains of the first aspect.

### Advantageous Effects of Invention

According to the present invention, there can be provided electrofused alumina grains excellent in grinding performance and a method for producing the electrofused alumina grains, as well as a grinding stone and a coated abrasive using the electrofused alumina grains.

**Brief Description of Drawings**

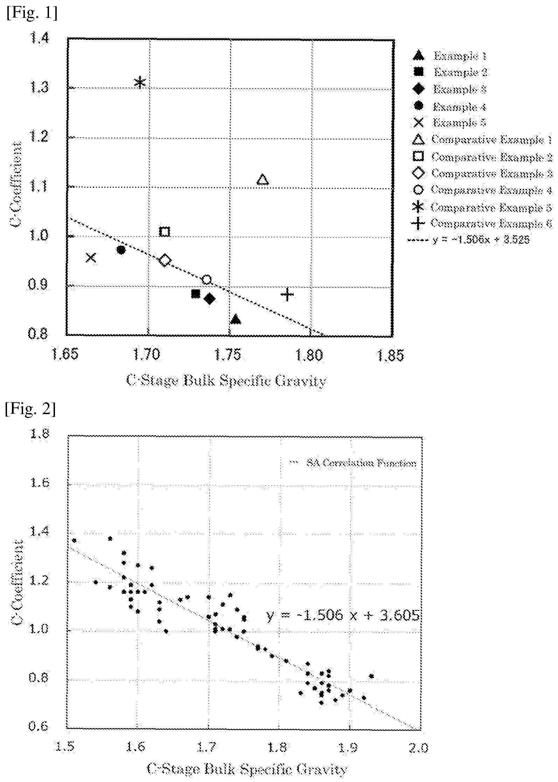

[fig.1]Fig. 1 is a graph in which the horizontal axis indicates the C-stage bulk specific gravity of electrofused alumina grains and the vertical axis indicates the C-coefficient of electrofused alumina grains, and in which the C-stage bulk specific gravity and the C-coefficient in Examples 1 to 5 and Comparative Examples 1 to 5 are plotted.

[fig.2]Fig. 2 is a graph showing an approximate linear function derived from the results of grain size measurement SA abrasive grains manufactured by Showa Denko KK, of three grain types of F36, F80 and F120, as specified in JIS R 6001-1998, in which 20 grains of each grain type were measured. The SA abrasive grains are alumina single-crystal abrasive grains and are an abrasive material mainly used for grinding and machining hardly-machinable materials. The SA abrasive grains contain 99.6% by mass of $Al_2O_3$, 0.03 % by mass of $SiO_2$, 0.03 % by mass of $Fe_2O_3$ and 0.3% by mass of $TiO_2$.

**Description of Embodiments**

The electrofused alumina grains of the present invention contain titanium and magnesium, wherein the titanium content in terms of $TiO_2$ in the electrofused alumina grains is 0.7 to 1.2% by mass, and the magnesium content in terms of MgO in the electrofused alumina grains is 3.0 to 20 mol relative to 100 mol of the titanium content in terms of $TiO_2$ in the electrofused alumina grains. Accordingly, the electrofused alumina grains of the present invention have high strength and toughness, and have sufficient grinding performance. The electrofused alumina grains of the present invention are described in detail hereinunder.

(Electrofused Alumina Grains)

In this description, the electrofused alumina grains are alumina grains obtained by fusing and solidifying a starting material of alumina and the like, as purified according to a Bayer process, in an electric furnace such as an arc furnace or the like to give an ingot, and pulverizing and size-regulating or crushing and size-regulating the resultant ingot. The electrofused alumina grains are alumina grains containing alumina as a main component. The alumina content in the electrofused alumina grains of the present invention is preferably 90% by mass or more, more preferably 95% by mass or more, even more preferably 98% by mass or more.

(Titanium Content)

The titanium content in terms of $TiO_2$ in the electrofused alumina grains of the present invention is 0.7 to 1.2% by mass. When the titanium content in terms of $TiO_2$ in the electrofused alumina grains of the present invention is less than 0.3% by mass, formation of a layer having a high titanium content on the surfaces of the electrofused alumina grains would be insufficient, as the case may be, for enhancing the strength of the electrofused alumina grains. On the other hand, when the titanium content in terms of $TiO_2$ in the electrofused alumina grains of the present invention is more than 3.0% by mass, the titanium amount segregating in the grain boundary of the electrofused alumina grains would increase too much, and as a result, the grinding performance of the electrofused alumina grains would be thereby rather worsened.

(Magnesium Content)

The magnesium content in terms of MgO in the electrofused alumina grains of the present invention is 3.0 to 20 mol relative to 100 mol of the titanium content in terms of $TiO_2$ in the electrofused alumina grains of the present invention. When the magnesium content is less than 0.1 mol, a sufficient amount of titanium necessary for enhancing the toughness of the electrofused alumina grains could not be dissolved as solid inside the electrofused alumina grains, as the case may be. In addition, the amount of magnesia dissolved as solid inside the electrofused alumina grains would be insufficient for enhancing the toughness of the electrofused alumina grains. On the other hand, when the magnesium content is more than 50 mol, a major part of titanium in the electrofused alumina grains would dissolve as solid inside the electrofused alumina grains so that formation of a layer having a high titanium content on the surfaces of the electrofused alumina grains would be insufficient, as the case may be.

(Effect of titanium and magnesium for grinding performance of electrofused alumina grains)

The grinding performance of the electrofused alumina grains is improved when the electrofused alumina grains contain titanium and magnesium. This would be presumed to be because of the following principle, though the principle should not restrict the present invention.

A part of titanium that the electrofused alumina grains contain precipitates on the surfaces of the electrofused alumina grains and a layer having a high titanium content is thereby formed on the surfaces of the electrofused alumina grains. Accordingly, the flaws formed in the surfaces of the electrofused alumina grains are repaired or reduced, and the strength of the electrofused alumina grains therefore increases.

In addition, a part of titanium that the electrofused alumina grains contain dissolves as solid inside the electrofused alumina grains. Accordingly, the crystals inside the electrofused alumina grains may be strained and the toughness of the electrofused alumina grains therefore improves.

Further, magnesium that the electrofused alumina grains contain acts to make a part of titanium dissolved as solid inside the electrofused alumina grains remain inside the grains without precipitating it on the surface of the electrofused alumina grains. Accordingly, it becomes possible to prevent the content of titanium dissolved as solid inside the electrofused alumina grains from being insufficient for improving the toughness of the electrofused alumina grains.

In addition, magnesium that the electrofused alumina grains contain also dissolves a solid inside the electrofused alumina grains. Accordingly, magnesium contained in the electrofused alumina grains also acts to make the crystals inside the electrofused alumina grains strained to thereby enhance the toughness of the electrofused alumina grains.

Consequently, when the electrofused alumina grains are made to contain titanium and magnesium, the strength and the toughness of the electrofused alumina grains can be high and therefore the grinding performance of the electrofused alumina grains is thereby enhanced.

(C-Coefficient and C-Stage Bulk Specific Gravity)

The electrofused alumina grains of the present invention preferably satisfy the following expression (1) where x indicates the C-stage bulk specific gravity of the electrofused alumina grains and y indicates the C-coefficient of the electrofused alumina grains, more preferably the following expression (2), even more preferably the following expression (3), further more preferably the following expression (4), still further preferably the following expression (5). Satisfying the requirement, the grinding performance of the electrofused alumina grains of the present invention can be enhanced.

$$y < -1.506x + 3.525 \ (1)$$

$$y < -1.506x + 3.520 \ (2)$$

$$y < -1.506x + 3.515 \ (3)$$

$$y < -1.506x + 3.510 \ (4)$$

$$y < -1.506x + 3.505 \ (5)$$

The C-coefficient is the same as the C-coefficient defined in JIS R6128-1987 (test method for toughness of artificial grinding material (ball mill method)). The measurement method for the C-coefficient is described in detail in the section of Examples given hereinunder.

Regarding the C-stage bulk specific gravity, the bulk specific gravity of the sample having remained on the 3rd-stage screen in screening using a standard screen specified in JIS R6001-1987 in measurement of the C-coefficient thereof is defined as a value of the C-stage bulk specific gravity measured according to the method specified in JIS R6126-1970. The measurement method for the C-stage bulk specific gravity is described in detail in the section of Examples given hereinunder.

In general, grains having a smaller grain size have a smaller value of C-stage bulk specific gravity, and grains having a larger grain size have a larger value of C-stage bulk specific gravity. However, in the case of the electrofused alumina grains that have been size-regulated to have a grain size on a same level, the C-stage bulk specific gravity may change depending on the shape of the grains but not on the grain size. With larger quantities of sharp grains or flat grains, a filling rate is lower in free fall and therefore the C-stage bulk specific gravity thereof is smaller. With larger quantities of nearly spherical grains, a filling rate is higher in free fall and therefore the C-stage bulk specific gravity thereof is larger.

There is a negative correlation between the C-coefficient and the C-stage bulk specific gravity (see Fig. 2 and Examples). As described above, a sample having a small C-stage bulk specific gravity contains large quantities of sharp grains and flat grains. Accordingly, when the C-coefficient of the grains of the type is measured, the value of the C-coefficient thereof is large (that is, the grains are poorly tough) since the grains are readily ground in a ball mill. On the other hand, a sample having a large C-stage bulk specific gravity contains large quantities of nearly spherical grains. Accordingly, when the C-coefficient of the grains of the type is measured, the value of the C-coefficient thereof is small (that is, the grains are highly tough) since the grains are hardly ground in a ball mill.

As described above, the electrofused alumina grains of the present invention preferably satisfy the above-mentioned expression (1). Considering that x > 0 and y > 0, in the region of the x (C-stage bulk specific gravity) - y (C-coefficient) plane, both the value of x (C-stage bulk specific gravity) and the value of y (C-coefficient) are within a range of small values. This indicates that the electrofused alumina grains of the present invention are sharp grains or flat grains, and the electrofused alumina grains of the present invention have high toughness. From the fact that sharp grains and flat grains have higher grinding performance than nearly spherical grains and that grains having higher toughness have higher grinding performance, it is known that the electrofused alumina grains of the present invention satisfying the above-mentioned expression (1) have higher grinding performance.

(Other elements than aluminum, oxygen, titanium and magnesium)

The electrofused alumina grains of the present invention may contain any other elements than aluminum, oxygen, titanium and magnesium. The total content of the other elements than aluminum, oxygen, titanium and magnesium in the electrofused alumina grains of the present invention is preferably 1.5 atomic molar % or less. When the content of the other elements than aluminum, oxygen, titanium and magnesium is 1.5 atomic molar % or less in terms of oxides thereof, the electrofused alumina grains of the present invention have sufficient grinding performance. The total content of the other elements than aluminum, oxygen, titanium and magnesium is preferably 1.0 atomic molar % or less, more preferably 0.5 atomic molar % or less, and most preferably 0 atomic molar %. Examples of the other elements than aluminum, oxygen, titanium and magnesium include sodium, silicon, calcium, iron, chromium, etc.

{Production Method for Electrofused Alumina Grains}

A production method for the electrofused alumina grains of the present invention includes a step (A) of preparing a mixture material by mixing an alumina material, a titanium compound and a magnesium compound, a step (B) of forming an ingot from the mixture material according to an electrofusing process, a step (C) of grinding the ingot to prepare a ground powder, a step (D) of size-regulating the ground powder to have a predetermined grain size to prepare size-regulated grains, and a step (E) of heating the size-regulated grains at a heating temperature of 1,000°C or higher to give electrofused alumina grains. According to the method, the electrofused alumina grains of the present invention excellent in grinding performance can be produced. The production method for the electrofused alumina grains of the present invention is described in detail hereinunder.

(Step (A))

In the step (A), an alumina material, a titanium compound and a magnesium compound are mixed to prepare a mixture material. For example, an alumina material, a titanium compound and a magnesium compound as metered in a predetermined blending ratio are mechanically mixed using a mixing machine or a ball mill, or are mixed by hand using a shovel or the like.

<Alumina Material>

Examples of the alumina material for use in the production method for the electrofused alumina grains of the present invention include alumina purified according to a Bayer process.

<Titanium Compound>

Examples of the titanium compound for use in the production method for the electrofused alumina grains of the present invention include titanium oxide (rutile-type, anatase-type, Brookite-type, etc.), titanium slag (prepared by reducing rutile ore or titanium iron ore with charcoal or coke in an electric furnace followed by separating iron and having a $TiO_2$ content of 80% by mass or more), etc. A preferred titanium compound is titanium oxide.

The blending amount of the titanium compound in the step (A) is so controlled that the titanium content in terms

of $TiO_2$ in the ingot is 0.7 to 1.2% by mass. Accordingly, the titanium content in terms of $TiO_2$ in the electrofused alumina grains produced according to the production method of the present invention can be controlled to be 0.7 to 1.2% by mass.

<Magnesium Compound>

Examples of the magnesium compound for use in the production method for the electrofused alumina grains of the present invention include magnesium oxide, magnesium carbonate, etc. A preferred magnesium compound is magnesium oxide.

The blending amount of the magnesium compound in the step (A) is so controlled that the magnesium content in terms of MgO in the ingot is 3.0 to 20 mol relative to 100 mol of the titanium content in terms of $TiO_2$ in the ingot. Accordingly, the magnesium content in terms of MgO in the electrofused alumina grains produced according to the production method of the present invention can be controlled to be 3.0 to 20 mol relative to 100 mol of the titanium content in terms of $TiO_2$ in the electrofused alumina grains produced according to the production method for the electrofused alumina grains of the present invention.

(Step (B))

In the step (B), an ingot is formed from the mixture material according to an electrofusing method. The electrofusing method is a method of fusing the mixture material using an electric furnace such as an electric arc furnace or the like at a heating temperature of, for example, about 2,000 to about 2,500°C. After completion of fusing, for example, the electric furnace is inclined and the molten material is discharged out from the pour spout arranged through the furnace wall, and cast into a previously prepared mold or the like to produce an ingot therein. The ingot is a polycrystalline alumina, and titanium and magnesium are dissolved as solid inside the alumina grains.

(Step (C))

In the step (C), the ingot is ground to form a ground powder. The ingot is, for example, roughly broken using a roll breaker, a drop hammer or the like, then visually screened, and thereafter ground using a grinding machine such as an impeller breaker, a jaw crusher, a roll crusher, an edge runner, a conical ball mill, etc.

(Step (D))

In the Step (D), the ground powder is size-regulated to have a predetermined grain size to give size-regulated grains. For example, when the electrofused alumina grains to be produced correspond to rough grains defined in JIS R 6001-1998, the ground powder is size-regulated to have a predetermined grain size via a screening step to give size-regulated grains. On the other hand, when the electrofused alumina grains to be produced correspond to a fine powder defined in JIS R 6001-1998, the ground powder is further finely powdered using a ball mill, an air mill or the like, and then the resultant fine powder is size-regulated to have a predetermined grain size via a purification or elutriation step.

(Step (E))

In the step (E), the size-regulated grains are heated at a heating temperature of 1,000°C or higher to be electrofused alumina grains. Accordingly, the strength and the toughness of the electrofused alumina grains can be increased.

For example, the size-regulated grains are put in a container such as a bowl with a lid or the like and heated in an electric furnace or a tunnel-type continuous firing furnace, or the size-regulated grains are directly heated in a firing device such as a rotary kiln or the like.

The heating temperature in the step (E) is 1,000°C of higher, preferably 1,000 to 1,800°C, more preferably 1,200 to 1,600°C, even more preferably 1,300 to 1,500°C. When the heating temperature is 1,000°C or higher, titanium dissolved as solid inside the size-regulated grains segregates much in the vicinity of the flaws that have formed in the surface of the size-regulated grains during grinding the ingot to repair the flaws in the surface. Accordingly, the strength of the electrofused alumina grains is increased. When the heating temperature is 1800°C or lower, the size-regulated grains can be heated without sintering the grains. The retention time for heating in the heat treatment is preferably 60 minutes or more. The atmosphere in heat treatment is preferably an air atmosphere. During the heat treatment, a part of titanium contained in the size-regulated grains depending on the amount of the magnesium compound blended remains inside the grains owing to the action of magnesium. Accordingly, the strains inside the electrofused alumina grains formed by dissolution of titanium as solid can be maintained as such, and the toughness of the electrofused alumina grains is thereby increased.

(Other Steps)

Between the step (C) and the step (D), a step of removing impurities such as fine powder, magnetic material and the like formed in the step (C) optionally followed by washing with acid and/or washing with water may be added. Accordingly, impurities can be prevented from diffusing inside the size-regulate grains in the heat treatment of the step (E).

After the step (E), the resultant electrofused alumina grains may be further size-regulated. The size-regulation method may be, for example, the same method as that of the step (D). Accordingly, electrofused alumina grains having a more regulated grain size can be obtained.

{Grinding Stone}

The grinding stone of the present invention contains the electrofused alumina grains of the present invention. Accordingly, a grinding stone excellent in grinding performance can be obtained. Specifically, the grinding stone of the present invention contains the electrofused alumina grains of the present invention as bound with a binder, and is composed of mainly the electrofused alumina grains, a binder and pores. The grinding stone can be produced by molding and curing the electrofused alumina grains with a binder such as a vitrified bond, a metal bond, a resin bond, etc. The binder is preferably a vitrified bond. The vitrified bond is generally called frit, as prepared by adequately blending feldspar, china stone, borax, clay, etc., and examples of the components thereof include $SiO_2$, $B_2O_3$, $Al_2O_3$, $Fe_2O_3$, CaO, MgO, $Na_2O$, $K_2O$, etc. A grinding stone using a vitrified bond (vitrified grinding stone) is produced by adding a small amount of a molding aid such as dextrin, phenolic resin or the like to a vitrified bond, mixing it with electrofused alumina grains, and press-molding and then firing it. The firing temperature is preferably 950 to 1150°C. The electrofused alumina grains of the present invention can also be used as abrasive grains for grinding stones such as a resinoid grinding stone, a rubber grinding stone, a silicate grinding stone, a shellac grinding stone, a magnesia grinding stone and others, in addition to the vitrified grinding stone.

{Coated Abrasive}

The coated abrasive of the present invention contains the electrofused alumina grains of the present invention. Accordingly, a coated abrasive excellent in grinding performance can be obtained. The coated abrasive can be produced by bonding electrofused alumina grains to a substrate with an adhesive. A preferred adhesive is a phenolic resin adhesive as realizing excellent grinding performance and excellent in waterproofness. When a resorcinol or a derivative thereof is used along with a phenolic resin adhesive, the curing condition for the phenolic resin adhesive can be relaxed. Examples of the substrate include paper, woven fabric, nonwoven fabric, etc. For example, for a grinding belt for heavy grinding, a woven fabric of polyester fibers may also be used. As the other polishing nonwoven fabric, a nonwoven fabric of synthetic fibers of nylon or the like can be used as the substrate. The coated abrasive includes, as specified in JIS as product standards, an abrasive-coated cloth (R6251-2006), an abrasive-coated paper (R6252-2006), a waterproof abrasive-coated paper (R6253-2006), an abrasive-coated disc (R6255-2014), an abrasive-coated belt (R6256-2006) a cylindrical abrasive-coated sleeve (R6257-2006), etc. However, the coated abrasive of the present invention is not limited to these. An important use for the coated abrasive of the present invention with respect to the use not specified in JIS is a polishing nonwoven fabric. This is a flexible polishing material (polishing cloth) for an abrasive nonwoven fabric composed of three constituent elements of a polishing material, fibers (nylon, polyester fibers, etc.) and an adhesive. This has a three-dimensional network structure of irregularly intercrossing constituent element fibers and a large-volume open cellular space, and has structural characteristics having a thickness of 2 to 8 mm or so and excellent in flexibility and compression restorability. Examples

The present invention is described more specifically with reference to Examples and Comparative Examples given hereunder, but the present invention is not whatsoever restricted by these Examples.

{Evaluation of Alumina Grains of Examples and Comparative Examples}

The alumina grains of Examples and Comparative Examples were evaluated as follows.

(Chemical Analysis)

The alumina content, the titanium content in terms of $TiO_2$, the magnesium content in terms of MgO, and the content of other metal elements (sodium, silicon, calcium and iron) in terms of metal oxides thereof were measured according to a fluorescent X-ray elementary analysis method. As the measurement apparatus for fluorescent X-ray elementary analysis, "ZSX Primus" manufactured by Rigaku Corporation was used.

A test sample was prepared according to a powder pressing method of grinding electrofused alumina grains with a grinding machine and using pellets formed by press-molding the ground powder, and analyzed according to a fundamental parameter method (FP method). The total amount to be the dominator in determining the alumina content, the titanium content in terms of $TiO_2$, the magnesium content in terms of MgO and the content of other metal elements in terms of metal oxides thereof (shown in Table 1) is the mass of electrofused alumina grains.

(Observation of Alumina Grains with Electron Probe Microanalyzer (EPMA)] Using an electron probe microanalyzer (EPMA) (manufactured by JEOL Ltd., Model Number: JXM-8530F), the alumina grains in Example 1 were analyzed for the titanium element and magnesium element distribution therein.

(C-Coefficient)

Using a ro-tap tester with a standard screen specified in JIS R6001-1987, 250 g of electrofused alumina grains were screened for 10 minutes. The total amount of the sample having remained on the 3rd stage sieve was further screened for 10 minutes, and 100 g of the electrofused alumina grains again having remained on the 3rd stage sieve were used as a test sample. The test sample was ground with a ball mill according to the method specified in JIS R6128-1975 to prepare a ground sample. Using a standard screen, the ground sample was screened for 5 minutes, and the weight of the ground sample having remained on the 4th sieve was referred to as R (x). In addition, as a control sample, F60 of a black silicon carbide ground material specified in JIS R6128-1975 was processed in the same manner as above, and after ground in a ball mill, the weight of F60 having remained on the 4th stage sieve was referred to as R (s). According to the following expression (6), the C-coefficient was calculated.

$$C\text{-Coefficient} = \log(100/R\ (x))/\log(100/R\ (s))\ (6)$$

When the grinding degree in a ball mill is smaller (that is, when the toughness is higher), R (x) is larger, and therefore, a sample having a higher toughness shows a smaller value of C-coefficient.

(C-Stage Bulk Specific Gravity)

The C-stage bulk specific gravity was determined in accordance with JIS R 6126-1970 "bulk specific gravity test method of artificial abrasive material". That is, the C-stage bulk specific gravity was determined according to the process mentioned below.

(1) The volume V (ml) of the cylinder is measured.
(2) The outlet port of the funnel is stopped with a stopper, about 120 ml of a sample is put into the funnel, and the cylinder is arranged just below the funnel.
(3) The stopper is drawn off and the total amount of the sample is dropped down into the cylinder, the sample having banked to the top of the cylinder is removed by lightly scooping it, and then the weight of the sample put in the cylinder is measured.
(4) The same operation of (2) and (3) was repeated for the same sample to obtain three measured values W1 (g), W2 (g) and W3 (g).
(5) From the volume V (ml) of the cylinder obtained in (1), and the three measured values W1 (g), W2 (g) and W3 (g) obtained in (4), the C-stage bulk specific gravity was calculated according to the following expression (7).

$$C\text{-Stage Bulk Specific Gravity (g/ml)} = \{(W1 + W2 + W3)/3\}/V\ (7)$$

(Grinding Ratio, Mean Grinding Power Value)

Using the alumina grains of Examples and Comparative Example, a vitrified grinding stone was produced, and evaluated for the grinding ratio and the mean grinding power value thereof.

<Production of Vitrified Grinding Stone>

13 parts by mass of a binder, borosilicate frit and 14 parts by mass of a molding aid, phenolic resin were mixed with 100 parts by mass of the alumina grains of Examples and Comparative Examples, using a mortar. The composition of the borosilicate frit used contained 69% by mass of $SiO_2$, 3% by mass of $Al_2O_3$, 19% by mass of $B_2O_3$, 4% by mass of $Na_2O$ and 0.5% by mass of MgO. After mixed, this was press-molded to form a molded article having an abrasive content of 46%, and the resultant molded article was heated at 1050°C for 10 hours. In cooling after the heat treatment, the article was slowly cooled at a cooling rate of 1°C/min or less especially between 500 and 600°C. In that manner, a vitrified grinding stone specified in JIS R6210 was produced. The dimension of all the grinding stones was outer diameter 200 mm phi × thickness 11 mm × inner diameter 76 mm phi.

<Grinding Test>

The produced vitrified grinding stone was tested for a grinding test under the test condition mentioned below.

Grinding machine: Okamoto Surface Grinder PSG-52DX (3.7 kW)
Grinding mode: wet-process plane traverse grinding
Material to be ground: S45C (HRC20)
Area to be ground: 200 mm × 100 mm
Grinding stone peripheral speed: 1800 m/min
Table speed: 15 m/min
Cutting dimension: $10 \times 10^{-6}$ m/pass
Total cutting dimension: 2 mm
Spark out: no
Grinding fluid: Noritake Cool PAL-101S (water-soluble grinding fluid)
Dress condition: single stone diamond dresser
Cutting: $10 \times 10^{6}$ m/pass
Lead: $0.5 \times 10^{6}$ m/rev.
Spark out: no

<Calculation of Grinding Ratio>

From the change in the dimension of the ground material before and after the grinding test, the ground amount ($mm^3$) of the ground material was determined. In addition, from the change in the dimension of the vitrified grinding stone before and after the grinding test, the wear amount ($mm^3$) of the vitrified grinding stone was determined. With that, the grinding ratio was calculated according to the following expression (8). A larger grinding ratio means that the wear amount of the grinding stone is smaller relative to the ground material, and that the grinding stone has excellent grinding performance.

$$\text{Grinding Ratio} = \text{ground amount of ground material } (mm^3)/\text{wear amount of grinding stone } (mm^3) \ (8)$$

<Measurement of Mean Grinding Power Value>

The mean grinding power value is a mean value of the power load value applied to the grinding machine in the grinding test. A smaller mean grinding power value indicates that the resistance given to the grinding machine in grinding is smaller. The mean grinding power value is a value to be used in parallel to the grinding ratio, and for example, in the case where the mean grinding power value is small relative to the grinding ratio of the same level or in the case where the grinding ratio is large relative to the mean grinding power value of the same level, the alumina grains are considered to have excellent grinding performance.

{Production of Alumina Grains of Examples and Comparative Examples}

Alumina grains of Examples 1 to 5 and alumina grains of Comparative Examples 1 to 5 were produced as follows.
Titanium slag ($TiO_2$ greater than or equal to 80% by mass) and magnesium oxide were mixed with a Bayer-process alumina powder in such a manner that the content in terms of $TiO_2$ or MgO were as shown in Table 1 to thereby prepare a mixture material. The mixture material was fused in an electric arc furnace, and the resultant melt was cooled to give an ingot.
The resultant ingot was ground to be a ground powder. Using a sieve having a sieve opening corresponding to the grain size F80 specified as the grain size of abrasive in JIS R6001-1998, the ground powder was size-regulated to give size-regulated grains.
300 g of the grains size-regulated to a grain size F80 were put in an alumina crucible, then heated up to 1400°C in an electric furnace (in air atmosphere) taking 2 hours, then kept at 1400°C for 1 hour, and the heating was stopped and this was left cooled in the furnace. After cooled to room temperature, this was size-regulated using a screen having a mesh of $250 \times 10^{-6}$m to $150 \times 10^{-6}$m to remove coarse grains formed by caking and fine grains, thereby producing alumina grains of Examples 1 to 5 and alumina grains of Comparative Examples 1 to 5 corresponding to an F80-grade alumina abrasive material.

{Evaluation Results}

The alumina grains of Examples 1 to 5 and the alumina grains of Comparative Examples 1 to 5 were analyzed and evaluated for chemical analysis, C-stage bulk specific gravity, C-coefficient, X-value, grinding ratio and mean grinding power value, and the evaluation results are shown in the following Table 1.

In addition, F80-grade SA abrasive grains manufactured by Showa Denko KK were analyzed and evaluated for chemical analysis, C-stage bulk specific gravity, C-coefficient, X-value, grinding ratio and mean grinding power value, and the evaluation results are shown in the following Table 1 as Comparative Example 6. The SA abrasive grains are alumina single-crystal abrasive grains, and are an abrasive material mainly used for grinding and machining hardly machinable materials. The SA abrasive grains contain 99.6% by mass of $Al_2O_3$, 0.03% by mass of $SiO_2$, 0.03% by mass of $Fe_2O_3$ and 0.3% by mass of $TiO_2$.

[Table 1]

| | Chemical Components (% by mass) with balance of Al$_2$O$_3$ | | | | | | Amount of MgO relative to TiO$_2$ (mol%) | C-Stage Bulk Specific Gravity (g/ml) | C-Coefficient | Grinding Ratio | Mean Grinding Power Value (W) |
|---|---|---|---|---|---|---|---|---|---|---|---|
| | TiO$_2$ | MgO | Na$_2$O | SiO$_2$ | CaO | Fe$_2$O$_3$ | | | | | |
| Example 1 | 0.99 | 0.02 | 0.16 | 0.09 | 0.03 | 0.03 | 4.0 | 1.75 | 0.84 | 584 | 678 |
| Example 2 | 1.00 | 0.04 | 0.14 | 0.05 | 0.02 | 0.02 | 7.9 | 1.73 | 0.88 | 586 | 678 |
| Example 3 | 0.97 | 0.07 | 0.15 | 0.03 | 0.02 | 0.02 | 14.3 | 1.74 | 0.88 | 540 | 719 |
| Example 4 | 0.71 | 0.03 | 0.15 | 0.04 | 0.03 | 0.02 | 8.4 | 1.68 | 0.97 | 491 | 659 |
| Example 5 | 1.22 | 0.06 | 0.16 | 0.03 | 0.02 | 0.03 | 9.7 | 1.66 | 0.96 | 522 | 704 |
| Comparative Example 1 | <0.01 | <0.01 | 0.17 | 0.03 | 0.03 | 0.02 | - | 1.77 | 1.12 | 274 | 702 |
| Comparative Example 2 | 0.39 | <0.01 | 0.17 | 0.08 | 0.03 | 0.02 | 0 | 1.79 | 0.88 | 434 | 697 |
| Comparative Example 3 | 0.69 | <0.01 | 0.16 | 0.04 | 0.03 | 0.02 | 0 | 1.71 | 0.95 | 450 | 694 |
| Comparative Example 4 | 0.94 | <0.01 | 0.15 | 0.06 | 0.03 | 0.02 | 0 | 1.74 | 0.91 | 496 | 678 |
| Comparative Example 5 | <0.01 | 0.04 | 0.17 | 0.03 | 0.03 | 0.02 | - | 1.69 | 1.31 | 289 | 631 |
| Comparative Example 6 | 0.32 | <0.01 | 0.20 | 0.03 | 0.02 | 0.03 | 0 | 1.71 | 1.01 | 401 | 704 |

Examples 1 to 5 are compared with Comparative Examples 1 to 3 and 5. It is known that, when the electrofused alumina grains contain both titanium and magnesium and where the titanium content in terms of $TiO_2$ in the electrofused alumina grains is 0.3 to 3.0% by mass, and the magnesium content in terms of MgO in the electrofused alumina grains is 0.1 to 50 mol relative to 100 mol of the titanium content in terms of $TiO_2$ in the electrofused alumina grains, the grinding stones produced using the electrofused alumina grains can have an extremely large grinding ratio though the mean grinding power value thereof does not almost change.

Example 4 is compared with Comparative Example 4. It is known that, when the electrofused alumina grains contain both titanium and magnesium and where the titanium content in terms of $TiO_2$ in the electrofused alumina grains is 0.3 to 3.0% by mass, and the magnesium content in terms of MgO in the electrofused alumina grains is 0.1 to 50 mol relative to 100 mol of the titanium content in terms of $TiO_2$ in the electrofused alumina grains, the grinding stones produced using the electrofused alumina grains can have a reduced mean grinding power value though the grinding ratio thereof does not almost change. Accordingly, it is known that, when the electrofused alumina grains contain both titanium and magnesium and where the titanium content in terms of $TiO_2$ in the electrofused alumina grains is 0.3 to 3.0% by mass, and the magnesium content in terms of MgO in the electrofused alumina grains is 0.1 to 50 mol relative to 100 mol of the titanium content in terms of $TiO_2$ in the electrofused alumina grains, the electrofused alumina grains have excellent grinding performance.

A graph drawn by plotting the C-stage bulk specific gravity and the C-coefficient of Examples 1 to 5 and Comparative Examples 1 to 5 is shown in Fig. 1, in which the horizontal axis indicates the C-stage bulk specific gravity of electrofused alumina grains and the vertical axis indicates the C-coefficient of electrofused alumina grains. In addition, a linear line satisfying y = -1.506x + 3.525 is shown as a dotted line in Fig. 1. From the graph, it is known that the alumina grains of Examples 1 to 5 satisfy the above-mentioned expression (1). Accordingly, it is known that, since the alumina grains of Examples 1 to 5 are excellent in grinding performance, the electrofused alumina grains satisfying the above expression (1) are excellent in grinding performance.

There is a negative correlation between the C-coefficient and the C-stage bulk specific gravity value, and as mentioned above, samples having a small C-stage bulk specific gravity contain large quantities of sharp grains and flat grains. When such samples are used for measuring the C-coefficient, the grains are much ground in a ball mill and the C-coefficient thereof is large (that is, the grains have low toughness). On the other hand, samples having a large C-stage bulk specific gravity contains large quantities of nearly spherical grains. When such samples are used for measuring the C-coefficient, the grains are hardly ground in a ball mill and the C-coefficient thereof is small (that is, the grains have high toughness). When the correlation is shown as a graph where the horizontal axis indicates the C-stage bulk specific gravity and the horizontal axis indicates the C-coefficient, it can be expressed as a positive linear function where the inclination is negative and the section is positive. Samples of the same abrasive material having a different grain size and a different C-stage bulk specific gravity can distribute in the vicinity of almost one and the same linear line. As an example, an approximate linear function derived from the results of grain size measurement SA abrasive grains manufactured by Showa Denko KK of three grain types of F36, F80 and F120, in which 20 grains of each grain type were measured, is shown in Fig. 2. The SA abrasive grains are alumina single-crystal abrasive grains and are an abrasive material mainly used for grinding and machining hardly-machinable materials. The SA abrasive grains contain 99.6% by mass of $Al_2O_3$, 0.03 % by mass of $SiO_2$, 0.03 % by mass of $Fe_2O_3$ and 0.3% by mass of $TiO_2$.

Here, "high-performance abrasive grains" are defined as those having a sharp form (= those having a small bulk specific gravity) and having high toughness (= those having a small C-coefficient value). In other words, this means that the abrasive grains having a value positioned in the region nearer to the origin in the graph of Fig. 2 have higher performance. Specifically, a crushed, electrofused alumina abrasive material having a titanium oxide content in terms of $TiO_2$ of 0.30% by mass (SA manufactured by Showa Denko KK) satisfies the correlation shown in Fig. 2, and the approximate linear function thereof is expressed by the following expression (9).

$$y = -1.506x + 3.605 \ (9)$$

(x = C-stage bulk specific gravity, y = C-coefficient)

Where X = -1.506x + 3.605, the expression (1) is expressed as follows.

$$y < X - 0.080 \ (10)$$

The electrofused alumina grains of Examples 1 to 5 satisfy the above-mentioned expression (1), which means that the electrofused alumina grains of Examples 1 to 5 are high-performance abrasive grains containing larger quantities of sharp grains and flat grains as compared with the above-mentioned SA abrasive grains (high-performance product), and excellent in toughness, and have more excellent grinding performance than the above-mentioned SA abrasive grains (high-performance product), and this is known from the above expression (10). This is considered to be correct from the fact that, in Fig. 1, Comparative Example 6 does not fall within the range that satisfies the expression (1). The grinding performance of the electrofused alumina grains of Examples 1 to 5 are excellent than the grinding performance of SA abrasive grains (high-performance product), and this is known from Table 1 in which the cutting ratio of Examples 1 to 5 is smaller than the cutting ratio of Comparative Example 6 though the mean grinding power value of Examples 1 to 5 is nearly the same as the mean grinding power value of Comparative Example 6.

When the alumina grains were observed with an electron probe microanalyzer (EPMA), it was known that a layer much containing titanium was formed in the vicinity of the fine flaws formed on the surfaces of the electrofused alumina grains in grinding the ingot, and that there was a region with titanium and magnesium coexisting therein inside the grains. In addition, it was known that, in the electrofused alumina grains containing both titanium and magnesium, titanium existed as two different states of one dissolved as solid in alumina (corundum) in the form of $Ti_2O_3$, and the other dissolved as solid in alumina (corundum) along with magnesium. In heat treatment, it is presumed that titanium dissolved as solid in the form of $Ti_2O_3$ would be released to form a layer containing much titanium on the surfaces of the electrofused alumina grains. In heat treatment, it is considered that titanium dissolved as solid along with magnesium is not removed but remains inside the electrofused alumina grains, therefore providing strain in the alumina crystals to thereby make the electrofused alumina grains have high toughness.

**Claims**

1. Electrofused alumina grains comprising titanium and magnesium, wherein:

   the titanium content in terms of $TiO_2$ in the electrofused alumina grains is from 0.7 to 1.2 % by mass, and
   the magnesium content in terms of MgO in the electrofused alumina grains is from 3.0 to 20 mol relative to 100 mol of the titanium content in terms of $TiO_2$ in the electrofused alumina grains.

2. The electrofused alumina grains according to claim 1, which satisfy the following expression (1):

$$y < \text{-}1.506x + 3.525 \tag{1}$$

   wherein x indicates the C-stage bulk specific gravity of the electrofused alumina grains, determined as described in "(C-stage Bulk Specific Gravity)" in the description, and y indicates the C-coefficient of the electrofused alumina grains, determined as described in "(C-Coefficient)" in the description.

3. A method for producing electrofused alumina grains of claim 1, comprising the steps of:

   preparing a mixture material by mixing an alumina material, a titanium compound and a magnesium compound, forming an ingot from the mixture material according to an electrofusing process, grinding the ingot to prepare a ground powder,
   size-regulating the ground powder to have a predetermined grain size to prepare size-regulated grains, and heating the size-regulated grains at a heating temperature of 1,000°C or higher to give electrofused alumina grains, wherein

   the blending amount of the titanium compound in the step of preparing the mixture material is such an amount that the titanium content in terms of $TiO_2$ in the ingot is from 0.7 to 1.2 % by mass, and
   wherein the blending amount of the magnesium compound in the step of preparing the mixture material is such an amount that the magnesium content in terms of MgO in the ingot is from 3.0 to 20 mol relative to 100 mol of the titanium content in terms of $TiO_2$ in the ingot.

4. The method for producing electrofused alumina grains according to claim 3, wherein the heating temperature in the step of producing the electrofused alumina grains is from 1,000°C to 1,800°C.

5. A grinding stone comprising electrofused alumina grains of claims 1 or 2.

**6.** A coated abrasive comprising electrofused alumina grains of claim 1 or 2.

**Patentansprüche**

**1.** Elektrogeschmolzene Aluminiumoxidkörner, umfassend Titan und Magnesium, wobei der als $TiO_2$ ausgedrückte Titangehalt in den elektrogeschmolzenen Aluminiumoxidkörnern 0,7 bis 1,2 Massen-% beträgt und der als MgO ausgedrückte Magnesiumgehalt in den elektrogeschmolzenen Aluminiumoxidkörnern 3,0 bis 20 Mol relativ zu 100 Mol des als $TiO_2$ ausgedrückten Titangehalts in den elektrogeschmolzenen Aluminiumoxidkörnern beträgt.

**2.** Elektrogeschmolzene Aluminiumoxidkörner nach Anspruch 1, die den folgenden Ausdruck (1) erfüllen:

$$y < -1{,}506x + 3{,}525 \quad (1)$$

wobei x das gemäß der Beschreibung in "(spezifisches C-Stadium-Schüttgewicht)" bestimmte spezifische Gewicht der elektrogeschmolzenen Aluminiumoxidkörner im C-Stadium angibt und y den gemäß der Beschreibung in "(C-Koeffizient)" bestimmten C-Koeffizienten der elektrogeschmolzenen Aluminiumoxidkörner angibt.

**3.** Verfahren zur Herstellung von elektrogeschmolzenen Aluminiumoxidkörnern nach Anspruch 1, umfassend die Schritte:

Herstellen eines Mischungsmaterials durch Mischen eines Aluminiumoxidmaterials, einer Titanverbindung und einer Magnesiumverbindung,
Bilden eines Barrens aus dem Mischungsmaterial nach einem Elektroschmelzverfahren, Mahlen des Barrens unter Herstellung eines gemahlenen Pulvers,
Größenregulieren des gemahlenen Pulvers auf eine vorbestimmte Korngröße unter Herstellung von größenregulierten Körnern und
Erhitzen der größenregulierten Körner auf eine Erhitzungstemperatur von 1000°C oder höher unter Bildung von elektrogeschmolzenen Aluminiumoxidkörnern,
wobei die Mischmenge der Titanverbindung im Schritt der Herstellung des Mischungsmaterials eine solche Menge ist, dass der als $TiO_2$ ausgedrückte Titangehalt 0,7 bis 1,2 Massen-% in dem Barren beträgt, und
wobei die Mischmenge der Magnesiumverbindung in dem Schritt der Herstellung des Mischungsmaterials derart ist, dass der als MgO ausgedrückte Magnesiumgehalt in dem Barren 3,0 bis 20 Mol relativ zu 100 Mol des als $TiO_2$ ausgedrückten Titangehalts in dem Barren beträgt.

**4.** Verfahren zur Herstellung von elektrogeschmolzenen Aluminiumoxidkörnern nach Anspruch 3, wobei die Erhitzungstemperatur im Schritt der Herstellung der elektrogeschmolzenen Aluminiumoxidkörner 1000°C bis 1800°C beträgt.

**5.** Schleifstein, umfassend elektrogeschmolzene Aluminiumoxidkörner nach Anspruch 1 oder 2.

**6.** Beschichtetes Schleifmittel, umfassend elektrogeschmolzene Aluminiumoxidkörner nach Anspruch 1 oder 2.

**Revendications**

**1.** Grains d'alumine électrofusionnés contenant du titane et du magnésium, dans lesquels:

la teneur en titane en termes de $TiO_2$ dans les grains d'alumine électrofusionnés est comprise entre 0,7 % en masse et 1,2 % en masse, et
la teneur en magnésium en termes de MgO dans les grains d'alumine électrofusionnés est comprise entre 3,0 moles et 20 moles par rapport à 100 moles de la teneur en titane en termes de $TiO_2$ dans les grains d'alumine électrofusionnés.

**2.** Grains d'alumine électrofusionnés selon la revendication 1, qui satisfait l'équation (1) suivante:

$$y < -1,506x + 3,525 \qquad (1)$$

dans laquelle x désigne la densité apparente à l'état C des grains d'alumine électrofusionnés, déterminée conformément à la manière décrite à la section "(Densité apparente à l'état C)" dans la description, et y désigne le coefficient C des grains d'alumine électrofusionnés, déterminée conformément à la manière décrite à la section "(Coefficient C)" dans la description.

3. Procédé de production de grains d'alumine électrofusionnés selon la revendication 1, comprenant les étapes suivantes:

préparer un matériau de mélange en mélangeant un matériau d'alumine, un composé de titane et un composé de magnésium,
former un lingot à partir du matériau de mélange à l'aide d'un procédé d'électrofusion,
broyer le lingot pour préparer une poudre broyée,
réguler la taille de la poudre broyée de manière à obtenir une taille de grain prédéterminée pour préparer des grains à taille régulée, et
chauffer les grains à taille régulée à une température de chauffage de 1000°C, ou plus, afin de produire des grains d'alumine électrofusionnés,
dans lequel la quantité de mélange du composé de titane à l'étape de préparation du matériau de mélange est une quantité telle que la teneur en titane en termes de $TiO_2$ dans le lingot est comprise entre 0,7 % en masse et 1,2 % en masse, et
dans lequel la quantité de mélange du composé de magnésium à l'étape de préparation du matériau de mélange est une quantité telle que la teneur en magnésium en termes de MgO dans le lingot est comprise entre 3,0 moles et 20 moles par rapport à 100 moles de la teneur en titane en termes de $TiO_2$ dans le lingot.

4. Procédé de production de grains d'alumine électrofusionnés selon la revendication 3, dans lequel la température de chauffage à l'étape de production des grains d'alumine électrofusionnés est comprise entre 1000°C et 1800°C.

5. Meule comportant des grains d'alumine électrofusionnés selon une revendication 1 ou 2.

6. Abrasif revêtu comprenant des grains d'alumine électrofusionnés selon une revendication 1 ou 2.

[Fig. 1]

[Fig. 2]

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 50080305 A
- JP 7215717 A
- JP 8133824 A
- JP 2011526574 T
- JP 3068678 A
- US 2015175769 A